# EUROPEAN PATENT APPLICATION

(11) **EP 2 532 682 A1**
(43) Date of publication of application: **12.12.2012**
(21) Application number: 11003335.4
(22) Date of filing: 20.04.2011
(51) Int. Cl.: C08B 3/08, C08B 3/10, C08B 31/04, C08B 37/00, C09D 101/10, C09D 103/06, C09D 105/00, C09D 105/08, C08F 220/18

(54) **A process for the preparation of co-polymerizable polysaccharide derivatives**

(71) Applicant: BASF SE, 67056 Ludwigshafen (DE)
(72) Inventor: Laine, Aki, 4125 Riehen (CH); Karppi, Asko, 20540 Turku (FI)
(74) Representative: TER MEER - STEINMEISTER & PARTNER GbR

(57) **Abstract**

The present invention relates to a process for the preparation of polysaccharide esters of ethylenically unsaturated acids. The esterification of polysaccharides is performed under anhydrous or semi anhydrous conditions by heating homogenised mixtures of polysaccharides and acidic monomers. Moreover, the invention relates to the use of thus prepared ethylenically unsaturated polysaccharide esters in coating formulations etc. and as the building blocks of polysaccharide hybrid co-polymers, to the preparation of the said co-polymers and the co-polymers themselves.

## Description

### Summary of the invention

This invention covers a novel method for the preparation of polysaccharide esters of ethylenically unsaturated acids, in particular of carboxylic acid, sulphonic acid, phosphonic acid or phosphoric acid functional ethylenically unsaturated monomers. The esterification of polysaccharide is performed under anhydrous or semi anhydrous conditions by heating homogenised mixtures of polysaccharides and acidic monomers. Moreover, the invention relates to the use of thus prepared ethylenically unsaturated polysaccharide esters, i.e. "macromonomers", as the building blocks/units of co-polymers (so-called polysaccharide hybrid co-polymers), to the preparation of the said co-polymers and the co-polymers themselves. Finally the invention covers the use of the ethylenically unsaturated polysaccharide esters in coating formulations and in UV curable compositions and the coating formulations and UV curable compositions themselves.

### Background of the invention

Starch is one of the most important natural polysaccharides. It is a renewable and feasible raw material and the third most used component by weight in the paper industry, where native and modified starches compete with their price advantage against more expensive fully synthetic polymeric products. In a wide range of applications, starch modificants are outperformed by more effective synthetic co-polymers, but there are also techniques which enable the incorporation of polysaccharides to synthetic polymers. The oxidative graft co-polymerization is a well known method to combine carbohydrates such as starch with synthetic polymers. Examples of these graftings and the prior art of the starch co-polymers can be found from the patent publications US 4835212, US4301017 and WO9321244. However, traditional graft co-polymerizations of starch have very limited selectivity for the grafting of starch and the harsh reaction conditions of grafting significantly reduce the molecular weight of starch. This leads to remarkable amounts of undesired low molecular weight dextrins and significantly limits the molecular weight ranges and monomer to starch ratios of the starch graft co-polymers.

A more controlled and versatile way of co-polymerization of carbohydrates with ethylenically unsaturated monomers is to covalently bind polymerizable groups on the carbohydrate backbone before the actual co-polymerization. However, the selection of methods for the introduction of co-polymerizable moieties on polysaccharide backbones are limited (e.g. the known processes use very unfeasible methods including acid chlorides or anhydrides, amine catalysts and organic solvents such as pyridine and 1,4-dioxane). The use of undesired and relatively expensive solvents and reagents generate both environmental load and high price for polysaccharide esters and may leave traces of harmful substances in the final products. Therefore, the general modification methods known do not fulfil the requirements for the large-volume and low-cost production of co-polymerizable polysaccharides, especially when the application of those involve paper and food products, cosmetics or pharmaceuticals.

A well known example of the ethylenically unsaturated starch derivatives is prepared by the base catalyzed aqueous etherification of starch with glycidyl methacrylate. The major obstacle for the feasibility of this concept is the alkali lability of glycidyl methacrylate combined with the alkaline reaction conditions, which lead to low reaction efficiencies.

In the literature (J. Appl. Polym. Sci. 96: 452―459, 2005), co-polymerizable acryloyl starch has been prepared by esterifying starch with acryloyl chloride in pyridine, but industrial scale modification of starch in pyridine or any other organic solvents is practically very unfeasible.

US 5,854,030 describes chemo enzymatic methods to prepare acrylic acid esters of sugars and sugar-containing poly(acrylate)-based hydrogels. The enzymatic esterifications of sugars therein are not applicable for higher molecular weight carbohydrate polymers such as starch and need unacceptable organic solvents.

US 2,668,156 describes several methods for the preparation of polymerizable starch derivatives. The reagents for the aqueous modifications of starch comprise methacrylic anhydride, allyl bromide, allyl chloroformate and butadiene monoxide.

US 4,079,025 exemplifies several synthesis for co-polymerizable starch derivatives. Dry processing of starch with N-methylol acrylamide appears to be a feasible method for the preparation of acrylamide functional starches, but as N-methylol compounds are nowadays recognized as potential formaldehyde liberators, this approach this method is not favourable due to the health risks. US 4,079,025 describes also the preparation (3-allyloxy-2-hydroxy)-propyl starches from aqueous etherifications of starch with allyl glycidyl ether. The allyl groups on starch are less reactive than e.g. vinyl or acrylate groups, but aqueous ultraviolet light curable formulations based on the allyl group containing starches are claimed.

Patent publication WO 2004/104048 describes a solventless esterification process of starch and other hydroxy polymers, in which the homogenous mixtures of a hydroxy polymer, a free amino, alkylamino or quaternary ammonium acid and an acidulating agent are heated to yield hydroxy polymer esters containing amino, alkylamino or quaternary ammonium groups. The invented process simultaneously hydrolyses the polymer structure during the esterification in acidic conditions. The process is especially suitable for the production of cationic starch esters of natural cationic carboxylic acids such as betaine and carnitine.

Moreover, patent publication WO 2007/065681 describes an esterification process of starch and other hydroxy polymers, where the homogenous mixtures of a hydroxy polymer, a free amino, alkylamino or quaternary ammonium acid ester and an alkalising agent are heated to yield hydroxy polymer esters containing amino, alkylamino or quaternary ammonium groups.

In view thereof, the object underlying the present invention is the provision of an improved process for the preparation of ethylenically unsaturated polysaccharide esters which overcomes the disadvantages and problems mentioned in the prior art.

Moreover, it is an object to provide for co-polymers comprising these polysaccharide esters as building blocks being suitable in the preparation of a wide range of polysaccharide ester based products.

### Detailed description of the invention

The process of the invention enables the feasible preparation of readily co-polymerizable ethylenically unsaturated polysaccharide esters, which allows a remarkable replacement of synthetic monomers with polysaccharides (e.g. starch) in a wide range of polymer based products.

Thus, the invention covers a novel method for the esterification of ethylenically unsaturated acids with starch and other polysaccharides as defined in claim 1. Moreover, the invention covers the use of the thus obtained macromonomers in coating formulations etc. as defined in claim 8 and in the preparation of co-polymers as defined in claim 9. Further, the invention also covers the obtained co-polymers themselves as defined in claims 12 and 13. Finally, the invention relates to coating formulations or UV curable compositions comprising the polysaccharide esters according to claim 14.

The ethylenically unsaturated acid is preferably a carboxylic acid, sulphonic acid, phosphonic acid or phosphoric acid functional ethylenically unsaturated monomer or oligomer. More preferably it is selected from the group consisting of acrylic acid, methacrylic acid, crotonic acid, itaconic acid, fumaric acid, maleic acid, vinylphosphonic acid, ethylene glycol methacrylate phosphate, vinylsulfonic acid or mixtures thereof. The ethylenically unsaturated acids used in accordance with the invention may be unsubstituted or substituted.

A preferred polysaccharide for the invented process is starch, such as unmodified starch (preferably granular), although modified starches can be used as well. However, other carbohydrate polymers or oligomers such as modified or unmodified cellulose, chitosan, guar gum, xanthan, pullulan, inulin, hemicelluloses, galactoglucomannan, alginate, dextrins and mixtures thereof are also applicable.

In a preferred esterification method according to this invention, a polysaccharide is mixed with the ethylenically unsaturated acid and optional further additives. The weight ratio of unsaturated acid and polysaccharide is preferably from 1:10000 to 1:1 and most preferably from 1:1000 to 1:5. Small amounts of water or plasticizing agents such as urea or glycerol can be used as additives to impregnate the polysaccharide with the esterifying reagents more effectively. Other acidic agents, preferably selected from the group consisting of HCl, H₂SO₄, NaHSO₄, H₃PO₄, NaH₂PO₄, HNO₃, acetic acid, propionic acid, butanoic acid, pivalic acid, lactic acid, glycolic acid, glyceric acid, benzoic acid, salicylic acid, methanesulphonic acid, *p*-toluenesulphonic acid and mixtures thereof, may also be introduced to the mixture to reduce the molecular weight of starch and to promote the esterification of unsaturated acids (i.e. functioning as acidic catalysts). The method according to the invention preferably is a solventless dry process. "Dry" in the sense of the invention comprises anhydrous and semi anhydrous conditions and means the presence of less than 25% water, preferably less than 15% water, more preferably less than 5% water in the reaction mixture, based on the total weight of the reaction mixture. Most preferably no water is present at all. If the amount of water present in the reaction mixture exceeds the above mentioned maximum values, the drying of the reaction mixture should be performed before the actual esterification step. When granular starch is used as a polysaccharide, the drying temperature is preferably below the gelatinization temperature of starch to prevent gelling related processability problems. Prior to the esterification, the moisture content of the reaction mixture is preferably less than 25% and more preferably less than 5%. "Solventless" means a maximum amount of organic solvents of 35%, preferably of 15%, more preferably of 5% in the reaction mixture, based on the total weight of the reaction mixture. Most preferably no organic solvent is present at all.

The esterification reaction is performed by heating the dry and homogeneous mixture of the polysaccharide, the ethylenically unsaturated acid and the optional additives at 50 °C or more, preferably at 70-230 °C, more preferably at 80-180 °C, most preferably at 90-150 °C, e.g. for 0.5-50 h, to yield desired degrees of esterification. The reaction time may vary from minutes to several days and can suitably be determined by the skilled person based on the type of the reactor, the reaction temperature and the choice of reagents.

Depending on the application of the obtained polysaccharide ester, the unreacted reagents may remain in the final product or the polysaccharide ester may be purified, e.g. by evaporating volatile reagents or suspending the polysaccharide in water and precipitating with ethanol, acetone or other appropriate solvent. In the case of granular starch, washing of the raw product with water is preferred.

In the preferred end use as mentioned hereinbelow in more detail, the raw unsaturated polysaccharide ester is used as a co-monomer of polymeric products as such and the remaining unesterified monomers of the raw product are also co-polymerized to the final hybrid co-polymer.

Variable degrees of substitution (DS; determined by ¹H-NMR spectroscopy) may be achieved for the polysaccharide esters. The preferred DS range for the esters is 0.0001-0.20, most preferably DS 0.001-0.05. The molecular weight of the final polysaccharide ester is dependent on the reaction temperature and time, along with the choice of reagents and the moisture content of the reaction mixture during the heating phase. Suitable conditions can be determined by the skilled person. In certain applications or processing steps, where low viscosities and high concentration solutions are required, an adequate level of hydrolysis of the polysaccharides is preferred. The process can be adjusted to provide controlled degradation to yield lower molecular weights polysaccharide esters having weight average molecular weights from 1 000 to 20 000 000 daltons, preferably from 50 000 to 5 000 000 daltons. For an instance, higher reaction temperatures and times favour the degradation of molecular weights and higher amounts of acidic reagents and moisture accelerate the degradation. When higher molecular weight polysaccharide esters are desired, a simultaneous crosslinking may be performed by addition of multivalent carboxylic acids, such as citric acid, succinic acid, malonic acid or EDTA, or other crosslinkers, such as glyoxal or epichlorohydrin, into the reaction mixtures. This allows the preparation of versatile products with a wide range of molecular weights.

The invented process can be feasibly performed using various apparatuses, such as ovens, dryers, microwave reactors, kneaders, fluidised beds, extruders, etc., which allow an easy and economical scale up of the ester production. As mentioned above, if desired, the processability and reactivity of the reaction mixture can be enhanced with suitable plasticizers, such as glycerol, ethylene glycol, diethylene glycol, urea, ethanolamine, diethanolamine, triethanolamine, trimethylolethane, sorbitol, maltitol, sucrose or fructose, and mixtures thereof.

The polysaccharide esters produced according to the invention are an attractive platform for the preparation of a wide range of polysaccharide based, particularly starch based products such as alkali swellable thickeners, wet-end polymers of paper making, surface sizing agents, UV curable compositions, latex like binders for coating colours and water based barrier coatings. Preferably they are used as a component of coating, paint or lacquer formulations, particularly being water-based. More preferably the coating is a photo initiator containing ultraviolet curable formulation.

Thus, the ethylenically unsaturated polysaccharide esters produced according to the invented process are suitable raw materials for a wide range of polymeric products. These esters are especially applicable as the so-called macromonomers, which copolymerize effectively with other ethylenically unsaturated monomers leading to polysaccharide hybrid co-polymers. Preferably, 0.1-99 %, even more preferably 5-90 % of these co-polymers is based on the polysaccharide macromonomers and most preferably 15-85 % of the co-polymers is based on these ethylenically unsaturated polysaccharide esters. The weight average molecular weight of the co-polymers is preferably at least 10 000 daltons, most preferably at least 100 000 daltons. Maximum values of the weight average molecular weight are preferably 25 000 000 daltons, more preferably 20 000 000 daltons and even more preferably 10 000 000 daltons. These co-polymers may then be used in the above mentioned polysaccharide based products e.g. as film formers, binders, thickeners or water retention and rheology modifiers. The term "co-polymer" as used herein should be understood as a polymer comprising two or more different kinds of (macro)monomers as the building blocks. The macromonomers can thereby replace significant amounts of more expensive monomers in many kind of polymers from latex dispersions to aqueous solution polymers and bulk plastics leading to an enormous potential in the reduction of raw material costs. In addition, the ability of macromonomers to homopolymerize can be exploited in curable coating formulations or in crosslinked superabsorbents. Moreover, the use of undesired and relatively expensive solvents and reagents which generate both environmental load and high price for starch esters and may leave traces of harmful substances in the final products, can be avoided in accordance with the present invention. Polysaccharide macromonomers may also enhance biodegradability and compostability of polymeric products. Consequently, the novel process clearly improves the characteristics also of the final products.

The present invention also relates to the process of preparing the above mentioned co-polymers comprising the co-polymerization of the polysaccharide esters (macromonomers) with one or more other monomers, preferably being selected from the group consisting of:
styrene, alpha-methylstyrene, vinyltoluene;
dienes;
(meth)acrylic esters comprising esters of acrylic acid and methacrylic acid with hydrogenated or fluorinated C1-C12 alcohols;
vinyl nitriles having from 3 to 12 carbon atoms;
carboxylic acid vinyl esters;
vinyl halides;
N-vinyl carboxamides;
di- and tri-(meth)acrylic esters of diols and triols;
glycidyl methacrylate or allyl glycidyl ether;
N-(hydroxymethyl)acrylamide or diacetone acrylamide;
2-acrylamido-2-methylpropane-sulphonic acid;
unsaturated ethylenic mono- and dicarboxylic acids;
monoalkyl esters of the above mentioned dicarboxylic acids with alkanols and their N-substituted derivatives;
amides of unsaturated carboxylic acids;
ethylenic monomers comprising a sulphonic acid group and its alkali metal and ammonium salts;
unsaturated ethylenic monomers comprising a secondary, tertiary or quaternary amino group or a heterocyclic group comprising nitrogen;
zwitterionic monomers.

The co-polymerization is carried out in the usual manner known to the skilled person. In a preferred embodiment it comprises a free-radical emulsion polymerization or an aqueous free-radical solution polymerization. Suitable conditions can be determined by the skilled person.

Finally, the present invention also relates to the co-polymers obtained by copolymerizing the macromonomers and the one or more other monomers. The co-polymers comprise as building units one or more polysaccharide esters of ethylenically unsaturated acids (macromonomers) and one or more other monomers, the latter being preferably selected from the group already mentioned above.

It will be appreciated that the essence of the present invention can be incorporated in the form of variety of embodiments, only a few of which are disclosed herein. It will be apparent for the skilled person that other embodiments exist and do not depart from the spirit of the invention. Thus the described embodiments should not be construed as restrictive.

### Examples

### Example 1. Esterification of waxy maize starch with acrylic acid.

1136 g of waxy maize starch (88% dry content) was sprayed with 111 g of acrylic acid in the Lödige type dry reactor. The mixture was transferred to the Vrieco-Nauta type dry reactor and the impregnated starch was heated in the closed reactor at 120°C for 4 hours.

The NMR analysis of the washed and purified sample of acryloyl starch indicated the degree of substitution of 0.006 for the acrylic acid ester of starch. According to the size exclusion chromatography the weight-average molecular weight of the product was 3,470,000 daltons.

The cooked 15% aqueous solution of the washed starch sample could be cross-linked to a rigid hydrogel with the addition ammonium persulphate and heating. In addition, co-polymerization of the starch acrylate with methacrylic acid and ethyl acrylate was demonstrated.

### Example 2. Esterification of potato starch with acrylic acid.

1136 g of waxy maize starch (88% dry content) was sprayed with a mixture consisting 111 g of acrylic acid, 2.0g of H₂SO₄ and 30 g of glycerol in the Lödige type dry reactor. The mixture was transferred to the Vrieco-Nauta type dry reactor and the impregnated starch was heated in the closed reactor at 120°C for 4 hours. The NMR analysis of the washed and purified sample of acryloyl starch indicated the degree of substitution of 0.006 for the acrylic acid ester of starch. According to the size exclusion chromatography the weight-average molecular weight of the product was 77,000 daltons.

### Example 3. Esterification of potato starch with methacrylic acid.

1220 g of potato starch (82% dry content) was sprayed with a mixture of methacrylic acid (111.6 g) and H₂SO₄ (2.0g) in the Lödige type dry reactor. The mixture was processed 4 hours at 95 °C. The NMR analysis of the efficiently washed and purified starch sample indicated the degree of substitution of 0.001 for methacrylic acid ester of starch.

### Example 4. Esterification of potato starch with itaconic acid.

1220 g of potato starch (82% dry content) was sprayed with a solution of itaconic acid (111.6 g) and NaOH (26.2 g) in 167 g of water in the Lödige type dry reactor. The mixture was transferred to the Vrieco-Nauta type dry reactor and vacuum dried below 90°C. The dry impregnated starch mixture was heated in the reactor at 120°C for 4 hours. The NMR analysis of the efficiently washed and purified starch sample indicated the degree of substitution of 0.01 for itaconic acid ester of starch.

### Example 5. Esterification of potato starch with vinylphosphonic acid.

52.7 g of vinylphosphonic acid and 27.81 g of urea were dissolved in 300 ml of water. The pH of the solution was adjusted to 1.0 with 50% sodium hydroxide solution and the solution was mixed with 500 g. The mixture was dried in laboratory oven at 50 °C overnight. The esterification reaction was conducted by heating the dry impregnated starch in oven at 130 °C for 4 hours. Finally, the starch ester of vinylphosphonic acid was purified by washings with aqueous ethanol and dried in oven at 50 °C overnight. The NMR analysis of the purified starch indicated the degree of substitution of 0.05 for vinylphosphonic acid ester of starch. According to the size exclusion chromatography the weight-average molecular weight of the product was 160,000 daltons.

### Example 6. Esterification of potato starch with vinylphosphonic acid.

36.9 g of vinylphosphonic acid and 38.9 g urea were dissolved in 300 ml of water and the pH of the solution was adjusted to 2.0 with 50 % sodium hydroxide solution. The solution was mixed with 700 g of potato starch in the Kenwood multipurpose mixer and the mixture was dried overnight in convection oven at 60 °C. The dry mixture was esterified at 130 °C for 4 h in convection oven. The NMR analysis of the purified starch indicated the degree of substitution of 0.01 for vinylphosphonic acid ester of starch. According to the size exclusion chromatography the weight-average molecular weight of the product was 5,400,000 daltons.

### Example 7. Esterification of potato starch with vinylphosphonic acid.

36.9 g of vinylphosphonic acid was dissolved in 300 ml of water and the pH of the solution was adjusted to 4.0 with 50 % sodium hydroxide solution. The solution was mixed to 700 g of potato starch in the Vrieco-Nauta type dry reactor and the excess of water was evaporated with vacuum at temperatures below 60 °C. The dry mixture was heated at 120 °C for 4 h. The NMR analysis of the purified starch indicated the degree of substitution of 0.002 for vinylphosphonic acid ester of starch. According to the size exclusion chromatography the weight-average molecular weight of the product was 16,000,000 daltons.

### Example 8. Esterification of guar gum with methacrylic acid.

500 g of guar gum was sprayed with methacrylic acid (55.8 g) in the Lödige type dry reactor and mixed effectively therein for 15 minutes. The impregnated mixture was transferred on trays to laboratory oven and esterified at 130 °C for 4 hours. After the reaction, methacrylic acid was completely evaporated from guar gum. The NMR analysis of the efficiently washed and purified guar gum sample indicated the degree of substitution of 0.004 for metacrylic acid ester of guar gum.

As a demonstration of the polymerizability of the guar gum ester, a 7 % aqueous solution of the guar gum ester could be cross-linked to a rigid hydrogel with the addition ammonium persulphate and heating.

### Example 9. Esterification of potato starch with 3-sulfopropyl methacrylate.

36.9 g of 3-sulfopropyl methacrylate potassium salt was dissolved in 250 ml of water and 41.7g of lactic and 1.0 g of H₂SO₄ were added. The solution was sprayed to 500 g of native potato starch in the Lödige type dry reactor. The impregnated starch was heated in oven at 130 °C for 4 hours. The NMR analysis of the purified starch indicated the degree of substitution of 0.004 for 3-methacryloyloxy-propylsulfonate ester of starch and the degree of substitution of 0.07 for lactic acid ester of starch.

### Example 10. Esterification and hydrolysis of potato starch with acrylic acid and H₂SO₄.

111.2 g of acrylic acid, 30.0 g of glycerol and 2.0 g of sulphuric acid were mixed together and sprayed to 1000 g of native potato starch in the Lödige type dry reactor. The mixture was homogenized for 10 minutes and transferred to Vrieco-Nauta type of dry reactor, where the mixture was heated at 120 °C for 4 hours. The excess of acrylic acid evaporated from the reactor during the esterification. The starch ester had the degree of substitution of 0.008 for acrylic acid and the weight-average molecular weight of the product was 77 000 daltons. The Brookfield viscosity of the product in water as a cooked 35% solution was 85 mPas at 60 °C and 210 mPas at 25 °C.

### Example 11. Copolymerization of starch acrylate with butyl acrylate.

150.0 g of starch acrylate from example 10 was jet cooked at 25% solids content. 75.0 g of butyl acrylate and 15.0 g of Disponil FES 993 surfactant were added. The solution was purged with nitrogen and heated to 80 °C. The initiator solution containing 0.15 g ammonium persulphate in 20 g of water was fed to the reactor during 1 hour and the solution was stirred at 85 °C for 3 hours. The resulted dispersion had the solids content of 31 %, the Brookfield viscosity of 1170 mPas and the number average particle size of 63 nm.

## Claims

1. A process for the preparation of polysaccharide esters of ethylenically unsaturated acids, **characterised in that** a reaction mixture, which comprises a polysaccharide and at least one ethylenically unsaturated acid and contains less than 25% water, is heated at temperatures higher than 50 °C.

2. The process according to claim 1, **characterised in that** the ethylenically unsaturated acid is a carboxylic acid, sulphonic acid, phosphonic acid or phosphoric acid functional ethylenically unsaturated monomer or mixtures thereof.

3. The process according to claim 1 or claim 2, **characterised in that** the reaction is carried out at temperatures from 80 to 230 °C, advantageously at temperatures from 90 to 150 °C.

4. The process according to any one of claims 1 - 3, **characterised in that** the polysaccharide is selected from the group consisting of unmodified or modified starch, cellulose, chitosan, guar gum, xanthan, pullulan, dextrins and mixtures thereof, preferably unmodified starch.

5. The process according to any one of claims 1 - 4, **characterised in that** the ethylenically unsaturated acid is acrylic acid, methacrylic acid, crotonic acid, itaconic acid, fumaric acid, maleic acid, vinylphosphonic acid, ethylene glycol methacrylate phosphate, vinylsulfonic acid or mixtures thereof.

6. The process according to any one of claims 1 - 5, **characterised in that** esterification of the ethylenically unsaturated acid is promoted with other acidic agents selected from the group consisting of HCl, H₂SO₄, NaHSO₄, H₃PO₄, NaH₂PO₄, HNO₃, formic acid, acetic acid, propionic acid, butanoic acid, pivalic acid, lactic acid, glycolic acid, glyceric acid, benzoic acid, salicylic acid, methanesulphonic acid, *p*-toluenesulphonic acid and mixtures thereof.

7. The process according to any one of claims 1 - 6, **characterised in that** the reactivity of the polysaccharide is enhanced with plasticizing agents selected from the group consisting of glycerol, ethylene glycol, diethylene glycol, urea, ethanolamine, diethanolamine, triethanolamine, trimethylolethane, sorbitol, maltitol, sucrose, fructose and mixtures thereof.

8. The process according to any one of claims 1 - 7, **characterised in that** the reaction mixture is processed as dry powder.

9. Use of the polysaccharide ester produced according to any one of claims 1 - 8, as a component of coating formulations, preferably being based on water, and UV curable compositions.

10. A polymerization process, **characterised in that** the polysaccharide ester obtained according to any one of claims 1 ― 8 is co-polymerized with one or more other monomers.

11. The polymerization process according to claim 10, **characterized in that** the one or more other monomers are selected from the group consisting of:
styrene, alpha-methylstyrene, vinyltoluene;
dienes;
(meth)acrylic esters comprising esters of acrylic acid and methacrylic acid with hydrogenated or fluorinated C1-C12 alcohols;
vinyl nitriles having from 3 to 12 carbon atoms;
carboxylic acid vinyl esters;
vinyl halides;
N-vinyl carboxamides;
di- and tri-(meth)acrylic esters of diols and triols;
glycidyl methacrylate or allyl glycidyl ether;
N-(hydroxymethyl)acrylamide or diacetone acrylamide;
2-acrylamido-2-methylpropane-sulphonic acid;
unsaturated ethylenic mono- and dicarboxylic acids;
monoalkyl esters of the above mentioned dicarboxylic acids with alkanols and their N-substituted derivatives;
amides of unsaturated carboxylic acids;
ethylenic monomers comprising a sulphonic acid group and its alkali metal and
ammonium salts;
unsaturated ethylenic monomers comprising a secondary, tertiary or quaternary amino group or a heterocyclic group comprising nitrogen;
zwitterionic monomers.

12. The process according to claim 10 or 11, **characterised in that** it comprises a free-radical emulsion polymerization or an aqueous free-radical solution polymerization.

13. A co-polymer, obtainable by the process as defined in any one of claims 10 ― 12.

14. A co-polymer, **characterized in that** it comprises as building units one or more polysaccharide esters of ethylenically unsaturated acids obtained according to any one of claims 1 ― 7 and one or more other monomers, the latter being preferably selected from the group consisting of:
styrene, alpha-methylstyrene, vinyltoluene;
dienes;
(meth)acrylic esters comprising esters of acrylic acid and methacrylic acid with hydrogenated or fluorinated C1-C12 alcohols;
vinyl nitriles having from 3 to 12 carbon atoms;
carboxylic acid vinyl esters;
vinyl halides;
di- and tri-(meth)acrylic esters of diols and triols;
glycidyl methacrylate or allyl glycidyl ether;
N-(hydroxymethyl)acrylamide or diacetone acrylamide;
2-acrylamido-2-methylpropane-sulphonic acid;
unsaturated ethylenic mono- and dicarboxylic acids;
monoalkyl esters of the above mentioned dicarboxylic acids with alkanols and their N-substituted derivatives;
amides of unsaturated carboxylic acids;
ethylenic monomers comprising a sulphonic acid group and its alkali metal and
ammonium salts;
unsaturated ethylenic monomers comprising a secondary, tertiary or quaternary amino group or a heterocyclic group comprising nitrogen;
zwitterionic monomers.

15. Coating formulation or UV curable composition comprising the polysaccharide ester produced according to any one of claims 1 ― 8.
